## Europäisches Patentamt

## European Patent Office

## Office européen des brevets

(19)

(11) **EP 1 052 385 B1**

(12) **EUROPÄISCHE PATENTSCHRIFT**

(45) Veröffentlichungstag und Bekanntmachung des Hinweises auf die Patenterteilung:
**09.07.2003 Patentblatt 2003/28**

(51) Int Cl.$^7$: **F01N 11/00**

(21) Anmeldenummer: **00108946.5**

(22) Anmeldetag: **27.04.2000**

(54) **Verfahren zur Diagnose eines kohlenwasserstoffoxidierende Eigenschaften zeigenden Katalysators**

Method of diagnosing a catalyst having hydrocarbon oxidizing properties

Procédé pour établir un diagnostic d'un catalyseur ayant des caractéristiques d'oxydation d'hydrocarbures

(84) Benannte Vertragsstaaten:
**DE FR GB**

(30) Priorität: **29.04.1999 DE 19919588**

(43) Veröffentlichungstag der Anmeldung:
**15.11.2000 Patentblatt 2000/46**

(73) Patentinhaber: **SIEMENS AKTIENGESELLSCHAFT**
**80333 München (DE)**

(72) Erfinder: **Zhang, Hong, Dr.**
**93105 Tegernheim (DE)**

(56) Entgegenhaltungen:
**EP-A- 0 609 527       EP-A- 0 756 071**
**WO-A-94/04800**

- **PATENT ABSTRACTS OF JAPAN vol. 016, no. 253 (M-1263), 9. Juni 1992 (1992-06-09) & JP 04 060106 A (MAZDA MOTOR CORP), 26. Februar 1992 (1992-02-26)**
- **PATENT ABSTRACTS OF JAPAN vol. 015, no. 321 (M-1147), 15. August 1991 (1991-08-15) & JP 03 121240 A (HITACHI LTD;OTHERS: 01), 23. Mai 1991 (1991-05-23)**

**Beschreibung**

Die vorliegende Erfindung betrifft ein Verfahren zur Diagnose eines kohlenwasserstoffoxidierende Eigenschaften zeigenden Katalysators, der im Abgastrakt einer Brennkraftmaschine angeordnet ist.

Bei Brennkraftmaschinen, insbesondere bei magerbetriebenen Brennkraftmaschinen wird oft ein Katalysator im Abgastrakt eingesetzt, der im Abgas enthaltene Kohlenwasserstoffe oxidiert. Dabei werden beispielsweise 3-Wege-Katalysatoren eingesetzt, die im reinen Magerbetrieb der Brennkraftmaschine kohlenwasserstoffoxidierende Eigenschaften haben. Magerbetriebene Brennkraftmaschinen, in deren Abgastrakt ein NOx speichernder Katalysator angeordnet ist, benötigen einen solchen Katalysator als Vor-Katalysator, da Kohlenwasserstoffe im Abgas die NOx-Speicherfähigkeit des NOx-Speicherkatalysators im Magerbetrieb der Brennkraftmaschine negativ beeinflussen, bzw. die Brennkraftmaschine insbesondere in der Warmlaufphase unerwünscht erhöht Kohlenwasserstoffe emittiert.

Der Wirkungsgrad des kohlenwasserstoffoxidierende Eigenschaften zeigenden Katalysators ist dabei für die Qualität der Abgasreinigung wesentlich. Aufgrund von Alterung und Vergiftung sinkt die Konvertierungsfähigkeit des Katalysators und damit sein Wirkungsgrad.

Für 3-Wege-Katalysatoren ist es bekannt, das Sauerstoffspeichervermögen eines Katalysators, das mit dessen Wirkungsgrad abnimmt, zu überwachen. Die DE 196 30 940 A1 beschreibt ein Verfahren, bei dem aus dem Sauerstoffspeichervermögen ein Maß für den Wirkungsgrad des Katalysators gewonnen wird, das eine Diagnose eines 3-Wege-Katalysators ermöglicht.

Wird ein Katalysator jedoch nur im Magerbetrieb zur Oxidation von Kohlenwasserstoffen eingesetzt, ist sein Sauerstoffspeichervermögen nicht von Interesse bzw. auslegungsbedingt ohnehin sehr gering. Genau dies ist bei einem Vor-Katalysator in einer Abgasanlage einer magerbetriebenen Brennkraftmaschine der Fall. Sich auf das Sauerstoffspeichervermögen stützende Diagnoseverfahren sind für diese Anwendungen deshalb nicht tauglich.

Für solche Zwecke ist es bekannt, die Temperatur stromauf sowie die Temperatur stromab des Vor-Katalysators zu erfassen und aus dem Verlauf dieser beiden Temperaturen während der Aufheizphase des Vor-Katalysators nach einem Kaltstart ein Maß für den Wirkungsgrad und mithin eine für die Diagnose taugliche Größe zu gewinnen. Ein solches Verfahren ist aus der DE 197 14 293 C1 bekannt.

Aus dem Dokument PATENT ABSTRACTS OF JAPAN, vol. 016, No. 253 (M-1263) bzw. JP 04060106A ist ein Verfahren zur Diagnose eines Katalysators bekannt, bei dem die Temperatur des Katalysators gemessen wird und der Temperaturgradient aus der Katalysatortemperatur bei normalem Betrieb der Brennkraftmaschine und der Katalysatortemperatur nach einer Änderung des Luft/Kraftstoff-Verhältnisses zu fett hin berechnet wird. Liegt der auf diese Weise berechnete Temperaturgradient nicht innerhalb eines zulässigen Bereiches, so wird hieraus auf einen verschlechterten Betriebszustand des Katalysators geschlossen.

Aus der EP 0 609 527 A1 und der WO 94/04800 ist ein Verfahren zur Diagnose eines Katalysators bekannt, bei dem während einer Schubabschaltungsphase die Zündung eines Zylinders der Brennkraftmaschine abgeschaltet und kurzfristig über das Einspritzventil Kraftstoff eingespritzt wird, ohne ihn zu zünden. Diese eingespritzte Kraftstoffmenge wird gemeinsam mit dem Abgas der übrigen, regulär betriebenen Zylinder dem Katalysator zugeführt und verursachte eine exotherme Reaktion an dessen katalytischer Oberfläche, die von einem Temperatursensor erfasst wird. Da allerdings die Schubabschaltungsphase meistens sehr kurz ist, ist es kaum möglich, während dieser Zeit einen Temperaturanstieg hinter dem Katalysator zu messen.

Der Erfindung liegt die Aufgabe zugrunde, ein Verfahren zur Diagnose eines kohlenwasserstoffoxierende Eigenschaften zeigenden Katalysators anzugeben, bei dem nur eine Temperaturmessung erforderlich ist und dennoch eine hohe Diagnosesicherheit erzielt wird.

Die Aufgabe wird durch die in Anspruch 1 gekennzeichnete Erfindung gelöst.

Der Erfindung nutzt den Sachverhalt, daß die Erzeugung exothermer Energie bei der Oxidation von Kohlenwasserstoffen je nach Wirkungsgrad des Katalysators unterschiedlich groß ausfällt.

Deshalb wird während des Ausschiebetaktes eines Zylinders diesem zusätzlich Kraftstoff zugeführt. Bei einer direkteinspritzenden Brennkraftmaschine kann dies beispielsweise durch eine Nacheinspritzung erfolgen. Diese zusätzliche Kraftstoffzuführung verursacht einen kurzzeitig erhöhten Kohlenwasserstoffgehalt im Abgas, das dem zu überprüfenden Katalysator zugeführt wird. Diese Kohlenwasserstoffe werden im Katalysator oxidiert, wobei der Umsetzungsgrad und damit die exotherme Energieerzeugung abhängig vom Wirkungsgrad des Katalysators ist. Je nach Wirkungsgrad des Katalysators stellt sich stromab des Katalysators ein unterschiedlich großer Temperaturanstieg ein. Somit kann man durch Messen der Abgastemperatur stromab des Katalysators ermitteln, ob der Temperaturanstieg und mithin der Wirkungsgrad des Katalysators ausreichend ist.

In einer vorteilhaften Weiterbildung ist das Verfahren auch bei nichtstationären Betriebszuständen der Brennkraftmaschine einfach durchführbar. Dazu wird die Temperatur stromab des Katalysators beispielsweise abhängig von Drehzahl, Füllung und Kraftstoffmasse usw. fortlaufend modelliert. Vor Beginn der Diagnose wird das Modell anhand der gemessenen Temperatur abgeglichen, so daß die Modelltemperatur vor der zusätzlichen Kraftstoffzuführung gleich der gemessenen Temperatur ist. Durch die Nacheinspritzung stellt sich eine Differenz zwischen gemessener Temperatur und Modelltemperatur ein, die ein Maß für die exotherme Energie ist, die aus der Umsetzung der Kohlenwasserstoffe im Katalysator entstand. Somit kann anhand dieser Temperaturdifferenz der Katalysatorwirkungsgrad ermittelt werden.

Das erfindungsgemäße Verfahren hat den Vorteil, daß ohne Verschlechterung der Diagnosesicherheit ein Temperatursensor eingespart werden kann.

Vorteilhafte Ausgestaltungen der Erfindung sind in den Unteransprüchen gekennzeichnet.

Die Erfindung wird nachfolgend unter Bezugnahme auf die Zeichnung näher erläutert. Die Zeichnung zeigt:

Fig. 1    eine schematische Darstellung einer Brennkraftmaschine, bei der das Verfahren zur Diagnose des Katalysators Anwendung findet,

Fig. 2    eine Zeitreihe der stromab des Katalysators gemessenen Temperatur und

Fig. 3    eine weitere Zeitreihe der stromab des Katalysators gemessenen Temperatur sowie einer Modelltemperatur.

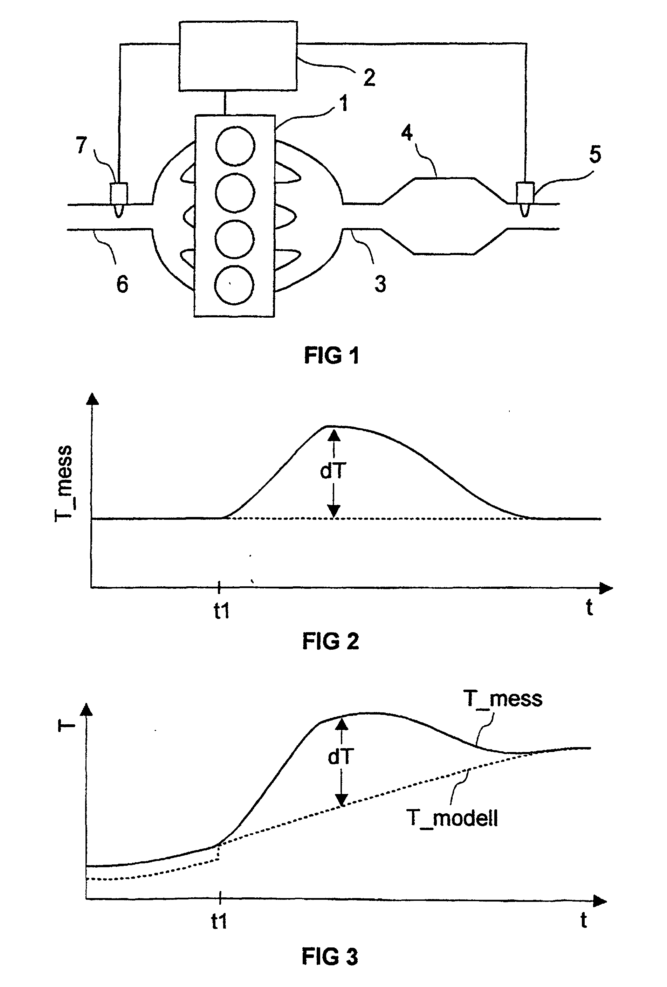

In Fig. 1 ist eine Brennkraftmaschine schematisch dargestellt, an der das Verfahren zur Diagnose des Katalysators angewendet werden soll. Dabei sind nur diejenigen Elemente enthalten, für das Verständnis der Erfindung wesentlich sind.

Eine Brennkraftmaschine 1 hat einen Abgastrakt 3, in dem ein Katalysator 4 angeordnet ist, stromab dessen sich ein Temperaturfühler 5 befindet. Dieser Temperaturfühler 5 ist mit einem Betriebssteuergerät 2 der Brennkraftmaschine 1 verbunden, das den Betrieb der Brennkraftmaschine 1 steuert und regelt.

Die Brennkraftmaschine 1 weist weiter einen Ansaugtrakt 6 auf, in dem ein Luftmassenmesser 7 angeordnet ist, dessen Meßsignale vom Betriebssteuergerät 2 ausgelesen werden.

Im Betrieb erfaßt das Betriebssteuergerät 2 mittels des Luftmassenmessers 7 die von der Brennkraftmaschine 1 angesaugte Luftmasse und ermittelt abhängig davon die entsprechende Kraftstoffmenge, die von einer (nicht dargestellten) Einspritzanlage der Brennkraftmaschine eingespritzt werden soll. Die Brennkraftmaschine 1 kann eine direkteinspritzende, magerbetriebene Brennkraftmaschine sein, bei der Kraftstoff direkt in die Brennräume der Zylinder eingespritzt wird und mit einem Luft/Kraftstoffverhältnis von über 1 verbrannt wird. Natürlich sind auch andere Brennkraftmaschinen denkbar, bei denen das beschriebene Verfahren Anwendung finden kann.

Das Abgas im Abgastrakt 3 der Brennkraftmaschine 1 wird im Katalysator 4 durch Oxidation von Schadstoffen wie Kohlenmonoxid und Kohlenwasserstoffen gereinigt. Der Katalysator 4 ist ein herkömmlicher 3-Wege-Katalysator, der aufgrund des Magerbetriebes aber nur oxidierende Eigenschaften zeigt.

Im Abgastrakt 3 ist stromab des Katalysators 4 ein (nicht dargestellter) NOx-Speicherkatalysator angeordnet, der zyklisch beladen und entladen wird. Der Wirkungsgrad der Beladung dieses NOx-Speicherkatalysators hängt stark von der Kohlenwasserstoffkonzentration im Abgas, das dem NOx-Speicherkatalysator zugeführt wird, ab. Eine hohe Kohlenwasserstoffkonzentration vermindert den Wirkungsgrad des NOx-Speicherkatalysators. Deshalb ist der Katalysator 4 im Abgastrakt 3 angeordnet, der unverbrannte Kohlenwasserstoff oxidiert. Dadurch wird der Wirkungsgrad des NOx-Speicherkatalysators verbessert und die Kohlenwasserstoffemissionen insbesondere in der Warmlaufphase werden gesenkt.

Der Katalysator 4 zeigt jedoch über die Betriebsdauer der Brennkraftmaschine 1 kein konstantes Konvertierungsverhalten, er altert. Durch diese Alterung verändert sich auch bei konstanten Bedingungen, z.B. hinsichtlich Betriebspunkt und Rohabgaszusammensetzung, der Kohlenwasserstoff-Anteil im Abgas stromab des Katalysators 4 und vor dem NOx-Speicherkatalysator.

Deshalb kommt der Diagnose des Katalysators 4 eine besondere Bedeutung zu.

Zur Diagnose wird während des Ausschiebetaktes eines Zylinders der Brennkraftmaschine 1 zusätzlich Kraftstoff zugeführt. Im Falle einer direkteinspritzenden Brennkraftmaschine erfolgt dies durch eine Nacheinspritzung in den Ausschiebetakt. Durch diese Nacheinspritzung werden dem Katalysator 4 unverbrannte Kohlenwasserstoffe zugeführt. Die Menge dieser Kohlenwasserstoffbeaufschlagung ist durch die Dauer der Nacheinspritzung sowie die im Abgastrakt 3 strömende Abgasmasse bestimmt. Letztere berechnet das Betriebssteuergerät 2 aus der vom Luftmassenmesser 7 angezeigten Luftmasse im Ansaugtrakt 6, sowie weiteren Betriebsparametern der Brennkraftmaschine 1.

Das Betriebssteuergerät 2 überwacht nach dieser Nacheinspritzung die Temperatur am Temperaturfühler 5 stromab des Katalysators 4.

Ein beispielhafter Temperaturverlauf ist in Fig. 2 dargestellt. In diesem Fall wird die Brennkraftmaschine 1 an einem konstanten Betriebspunkt betrieben, an dem die Temperatur des Abgases stromab des Katalysators 4 ohne die Nacheinspritzung normal bliebe (gestrichelte Linie). Die Temperaturerhöhung dT der gemessenen Temperatur T_mess ist durch die mit der Oxidation der Kohlenwasserstoffe freiwerdende Energie verursacht.

Das Betriebssteuergerät 2 ermittelt betriebspunktabhängig einen Schwellenwert für dT, bei dessen Unterschreitung der Katalysator 4 als defekt diagnostiziert wird.

Um bei nichtstationären Betriebszuständen die Katalysatordiagnose durchführen zu können, modelliert das Betriebssteuergerät 2 abhängig von Drehzahl, Füllung und Kraftstoffmasse sowie ggf. unter Berücksichtigung der Umgebungstemperatur die Abgastemperatur stromab des Katalysators 4. Vor Beginn einer Nacheinspritzung wird zum Zeitpunkt t1 die Modelltemperatur T_modell mit der vom Temperaturfühler 5 gemessenen Temperatur T_mess abgeglichen.

Dadurch ist sichergestellt, daß das Modell für die Zeitdauer der nachfolgenden Katalysatorüberprüfung ziemlich exakt die Temperatur wiedergibt, die sich ohne die nun folgende zusätzliche Kraftstoffzuteilung während des Ausschiebetaktes eines Zylinders ergeben würde. Aus der Differenz dT (T_mess - T_modell) ermittelt das Betriebssteuergerät 2 wiederum, ob der Katalysator 4 noch ausreichenden Wirkungsgrad hat. Unterschreitet dT einen betriebspunktabhängigen Schwellenwert, so wird der Katalysator als defekt diagnostiziert.

Bei der Bestimmung des Schwellenwertes wird folgender Sachverhalt berücksichtigt. Die Umsetzung der Kohlenwasserstoffe unter Abgabe von Energie ist abhängig von der dem Katalysator 4 zugeführten Menge an Kohlenwasserstoffen und kann durch folgende Gleichung erhalten werden:

$$E = dT * [(1 + 1/C) * M\_LM + M\_SLM] * c_A * H,$$

wobei

C ein Koeffizient für die zugeführte Kraftstoffmenge ist, der bei Lambda = 1 einen Wert von 14,3 aufweist und die Volumenzunahme durch die Verbrennung berücksichtigt,

M_LM der Luftmassenstrom im Ansaugtrakt,

M_SLM ein eventueller Sekundärluftmassenstrom,

$c_A$ die spezifische Wärmekapazität des Abgases bei konstantem Druck und

H einen Wert, der von der nacheingespritzten Kraftstoffmenge abhängt, bezeichnet.

Da letztlich die durch die Oxidation der Kohlenwasserstoffe freiwerdende exotherme Energie E das Maß für den Wirkungsgrad des Katalysators 4 darstellt, wird der Schwellenwert so gewählt, daß durch Umformung obiger Gleichung ein Wert für dT erhalten wird, der betriebspunktabhängige Variationen von M_LM, M_SLM, C und $c_A$ berücksichtigt, wobei $c_A$ in der Regel als konstant angenommen werden kann. Weiter muß natürlich der Wert für H berücksichtigt werden.

dT kann dann aus einem Kennfeld entnommen werden, das über M_LM, M_SLM, H und C aufgespannt ist.

## Patentansprüche

1. Verfahren zur Diagnose eines kohlenwasserstoffoxidierende Eigenschaften zeigenden Katalysators (4), der im Abgastrakt (3) einer Brennkraftmaschine (1) angeordnet ist,bei dem während des Betriebs der Brennkraftmaschine in einer Messphase zusätzlicher Kraftstoff nach dem Verbrennungsvorgang in das Abgas stromauf des Katalysators (4) zugeführt wird, der Temperaturverlauf des Abgases stromab des Katalysators (4) überwacht wird und bei einem unter einem Schwellenwert bleibenden Temperaturanstieg der Katalysator (4) als defekt diagnostiziert wird.

2. Verfahren nach Anspruch 1,
   **dadurch gekennzeichnet, daß** die Diagnose in einem Betriebspunkt der Brennkraftmaschine (1) durchgeführt wird, bei dem die Abgastemperatur ohne zusätzliche Kraftstoffzufuhr annähernd konstant bleiben würde.

3. Verfahren nach Anspruch 1,
   **dadurch gekennzeichnet, daß** die Temperatur stromab des Katalysators (4) fortwährend aus Betriebsparametern der Brennkraftmaschine (1) modelliert wird, vor der Diagnose die Modelltemperatur (T_modell) mit der gemessenen Temperatur (T_mess) abgeglichen wird und der Temperaturanstieg (dT) bei der Diagnose aus der Differenz zwischen Modelltemperatur und gemessener Temperatur bestimmt wird.

4. Verfahren nach einem der vorherigen Ansprüche,
   **dadurch gekennzeichnet, daß** die Menge des zusätzlich zugeführten Kraftstoffes und/oder der Schwellenwert abhängig vom Luftmassenstrom, den die Brennkraftmaschine (1) ansaugt, gewählt wird.

5. Verfahren nach Anspruch 4,
   **dadurch gekennzeichnet, daß** der Schwellenwert aus einem Kennfeld entnommen wird, das über einem die zugeführte Kraftstoffmenge wiedergebenden Wert, dem Luftmassenstrom im Ansaugtrakt (6) und vom Luft/Kraftstoffverhältnis abhängigen Koeffizienten aufgespannt ist.

6. Verfahren nach einem der vorherigen Ansprüche,
   **dadurch gekennzeichnet, daß** die Kraftstoffzufuhr in einen einen Ausschiebetakt durchführenden Zylinder erfolgt.

## Claims

1. Method for the diagnosis of a catalytic converter (4) displaying hydrocarbon-oxidising properties which is arranged in the exhaust gas tract (3) of an internal combustion engine (1), in the case of which during operation of the internal combustion engine in a measuring phase additional fuel is supplied to the exhaust gas upstream of the catalytic converter (4) after the combustion process, the temperature pattern of the exhaust gas downstream of the catalytic converter (4) is monitored and the catalytic converter (4) is diagnosed as defective in the case of an increase in temperature falling short of a threshold value.

2. Method according to Claim 1, **characterised in that** the diagnosis is performed at an operating point of the internal combustion engine (1) at which the exhaust gas temperature would remain almost constant without additional fuel.

3. Method according to Claim 1, **characterised in that** the temperature downstream of the catalytic converter (4) is constantly modelled from operating parameters of the internal combustion engine (1), before diagnosis the model temperature (T_modell) is compared with the measured temperature (T_mess) and the increase in temperature (dT) in the diagnosis is determined from the difference between model temperature and measured temperature.

4. Method according to one of the preceding claims, **characterised in that** the volume of additional fuel supplied and/or the threshold value is selected dependent on the airflow which the internal combustion engine (1) takes in.

5. Method according to Claim 4, **characterised in that** the threshold value is taken from performance characteristics that cover a value reproducing the amount of fuel supplied, the airflow in the intake tract (6) and coefficients dependent on the air/fuel ratio.

6. Method according to one of the preceding claims, **characterised in that** the fuel is supplied to a cylinder during a sliding-out cycle.

## Revendications

1. Procédé pour diagnostiquer un catalyseur (4) ayant des caractéristiques d'oxydation d'hydrocarbures, ce catalyseur étant disposé dans le trajet d'échappement (3) d'un moteur à combustion interne (1), le procédé comprenant l'introduction, dans une phase de mesure au cours du fonctionnement du moteur à combustion interne, de carburant additionnel dans les gaz d'échappement en aval du catalyseur (4) après le processus de combustion, le contrôle de l'évolution de la température des gaz d'échappement en aval du catalyseur (4), et la déclaration du catalyseur (4) comme défectueux si l'augmentation de température reste au-dessous d'une valeur de seuil.

2. Procédé selon la revendication 1, **caractérisé en ce que** le diagnostic est effectué à un point de fonctionnement du moteur à combustion interne (1) auquel la température des gaz d'échappement resterait approximativement constante s'il n'y avait pas d'adjonction de carburant additionnel.

3. Procédé selon la revendication 1, **caractérisé en ce que** la température en aval du catalyseur (4) est continuellement modélisée à partir de paramètres de fonctionnement du moteur à combustion interne (1), que la température modélisée (T_modell) est ajustée à la température mesurée (T_mess) avant le diagnostic, et que l'augmentation de température (dT) est déterminée au cours du diagnostic à partir de la différence entre la température modélisée et la température mesurée.

4. Procédé selon l'une des revendications précédentes, **caractérisé en ce que** la quantité de carburant additionnellement introduit et/ou la valeur de seuil sont choisies en fonction du flux massique d'air aspiré par le moteur à combustion interne (1).

5. Procédé selon la revendication 4, **caractérisé en ce que** la valeur de seuil est extraite d'une table caractéristique dressée en fonction d'une valeur représentant la quantité de carburant ajoutée, du flux massique d'air dans le trajet d'aspiration (6), et d'un coefficient dépendant du rapport air/carburant.

6. Procédé selon l'une des revendications précédentes, **caractérisé en ce que** l'addition de carburant est effectuée dans un cylindre effectuant son temps d'échappement.

FIG 1

FIG 2

FIG 3